(19) Europäisches Patentamt / European Patent Office / Office européen des brevets

(11) **EP 3 460 349 B1**

(12) **EUROPEAN PATENT SPECIFICATION**

(45) Date of publication and mention
of the grant of the patent:
**11.08.2021  Bulletin 2021/32**

(21) Application number: **17192266.9**

(22) Date of filing: **21.09.2017**

(51) Int Cl.:
*F24F 11/46* (2018.01)      *F24F 11/77* (2018.01)
*F24F 11/83* (2018.01)      *F24F 11/48* (2018.01)
*F24F 110/10* (2018.01)      *F24F 110/20* (2018.01)

(54) **LATENT HEAT REDUCTION**

LATENTWÄRMEREDUZIERUNG

RÉDUCTION DE CHALEUR LATENTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.03.2019  Bulletin 2019/13**

(73) Proprietor: **Siemens Schweiz AG
8047 Zürich (CH)**

(72) Inventor: **Gwerder, Markus
6312 Steinhausen (CH)**

(74) Representative: **Maier, Daniel Oliver
Siemens AG
Postfach 22 16 34
80506 München (DE)**

(56) References cited:
**EP-A1- 2 806 223      JP-A- 2005 291 571
US-A1- 2009 210 095**

## Description

Background

The present disclosure relates to moisture reduction in structures. More specifically, the instant disclosure teaches dehumidification in tropical and / or humid climates.

Structures such as commercial, residential and / or industrial buildings frequently provide a heating, ventilation, air-conditioning, (HVAC) system. HVAC systems may comprise water cooling units in addition to ventilation units. Water cooling units may, by way of example, be mounted to the ceiling of a structure.

Systems with combined ventilation and water cooling units are effective at lowering airflow required for cooling, since the cooling load can largely be covered by the water system. These systems ideally lower airflow to an amount required to maintain hygiene. HVAC systems with combined ventilation and water cooling units also offer benefits in terms of allowing the use of small-sized or medium-sized ventilation systems.

Ventilation systems may then be employed that supply a plurality of spaces, in particular a plurality of rooms, within a structure. HVAC systems with combined ventilation and water cooling units also allow decentralized ventilation units. That said, reduced rates of airflow also entail a significant reduction in capacity for moisture removal.

HVAC systems, in particular systems for commercial and / or industrial sites, frequently enter into economy mode on weekends and / or during night-time. A HVAC system in economy mode generally allows for larger deviations from set points used by a system in comfort mode. That is, humidity and / or temperature will generally deviate further from their comfort set points on weekends than on working days.

Accordingly, a transition from economy mode to comfort mode must often be effected early morning. This transition means that temperature and / or humidity have to be brought closer to their comfort set points. A controller thus changes a set of (proportional, integral, derivative) parameters and / or set point values to accomplish the transition. The controller controls ventilation and / or water cooling systems of a HVAC installation accordingly.

As the system transitions from economy to comfort mode, the amount related to latent heat to be removed may be significant. Tropical climates further exacerbate the problem due to high levels of outside air humidity. The system controller then has to accomplish the tasks of removing excess humidity and of adjusting temperature toward a set point.

Temperature and humidity as well as air quality inside an industrial, commercial and / or residential building generally have to be within acceptable limits as the building is in use. The HVAC installation thus has to begin the transition from economy settings to comfort settings in a timely manner.

The process of changing from economy mode to comfort mode involves conflicting technical requirements. The transition needs to be effected in a timely manner. The transition is ideally also carried out in a cost-effective manner. That is, power consumption and / or the cost associated with power consumption should be kept to a minimum.

The patent US7809472B1 issued on 5 October 2010. A patent application for US7809472B1 was filed on 5 July 2005. US7809472B1 discloses a control system for multiple heating, ventilation and air conditioning units.

The patent US8790451B1 issued on 29 July 2014. A patent application for US8790451B1 was filed on 16 September 2011. US8790451B1 teaches a method and a system for integrated home cooling utilizing solar power.

The patent US4984433A issued on 15 January 1991. A patent application for US4984433A was filed on 26 September 1989. US4984433A discloses an air conditioning apparatus having variable sensible heat ratio.

The patent US6427454B1 issued on 6 August 2002. A patent application for US6427454B1 was filed on 5 February 2000. US6427454B1 teaches an air conditioner and controller for active dehumidification while using ambient air to inhibit overcooling.

The patent application EP2902720A1 was published on 5 August 2015. EP2902720A1 claims priority of a Japanese application JP2012218202. EP2902720A1 discloses a controller for a ventilation device.

The patent US5303561A issued on 19 April 1994. A patent application for US5303561A was filed on 14 October 1992. US5303561A teaches a control system for a heat pump having a humidity responsive variable speed fan.

The patent US5303561A issued on 19 April 1994. A patent application for US5303561A was filed on 14 October 1992. US5303561A teaches a control system for a heat pump having a humidity responsive variable speed fan.

The patent US8155900B1 issued on 10 April 2012. A patent application for US8155900B1 was filed on 29 January 2009. US8155900B1 discloses a method and a system for calculating energy metrics of a building and one or more zones within the building.

A patent application EP2806223A1 was filed on 26 December 2012. The application was published on 26 November 2014. EP2806223A1 deals with an air-conditioning system that adjusts temperature and humidity.

The aim of the present disclosure is at least to mitigate the aforementioned difficulties and to optimize a HVAC system in view of cost-effectiveness and minimum power consumption.

Summary

The above problems are resolved by a method according to claim 1. Alternatively the above problems are resolved by a non-transitory, tangible computer readable medium according to claim 13. Preferred embodiments of the present disclosure are covered by the dependent claims.

It is a further object of the instant disclosure to provide a method wherein the circulation of air in the first step is a function of the power intake and / or the cost versus blower speed.

It is another object of the instant disclosure to provide a method that accounts for a disproportionate increase in power intake and / or cost with blower speed.

It is a further object of the instant disclosure to provide a method wherein the second step commences before the end of the first step when the water-cooling unit is a high-temperature cooling unit connected to a low-temperature-lift chiller.

It is a further object of the instant disclosure to provide a method wherein outside air will be introduced into the structure where dehumidification requires the outside air ventilation unit to operate at low load only.

It is a further object of the instant disclosure to provide a method that relies on measured quantities to further optimize the transition to comfort mode.

It is still a further object of the instant disclosure to provide a method wherein measured quantities are derived from signals obtained from (temperature and / or moisture) sensors.

It is a particular object of the instant disclosure to provide a method wherein measured quantities are obtained of flow rate, of temperature, and of humidity for supply air, and for extract air. Also, the fluid (water) cooling unit provides measured quantities of inlet temperature, of outlet temperature and of flow rate. In addition, the electrical power intake of the (gaseous) fluid conveyor is measured. The amount of power required for latent heat reduction is thus obtained directly.

It is another particular object of the instant disclosure to provide a method wherein all quantities but the flow rate of air are measured. The flow rate of air is then determined from the power balance of the (refrigerant) cooling coil taking into account conservation of energy.

It is another particular object of the instant disclosure to provide a method wherein all quantities but the power intake of the (gaseous) fluid conveyor are measured. An estimate of the power intake of the fluid conveyor can then be obtained from the technical specifications of the unit.

It is another particular object of the instant disclosure to provide a method wherein all quantities but the quantities relating to extract air are measured. It is then fair to assume that the quantities for extract air correspond to and / or are the same as the quantities for indoor air.

It is a further object of the instant disclosure to provide a method wherein condensation (on outer surfaces of cooling units) is inhibited.

Brief description of the drawings

Various features will become apparent to those skilled in the art from the following detailed description of the disclosed non-limiting embodiments. The drawings that accompany the detailed description can be briefly described as follows:

   FIG 1 is a block diagram showing the principal components of a HVAC installation according to the instant disclosure.

   FIG 2 schematically depicts a controller in communication with actuators and sensors of a HVAC installation.

   FIG 3 schematically depicts a controller in communication with actuators and sensors with an additional connection to a cloud computer.

   FIG 4 shows a plot of an amount indicative of latent heat versus time.

Detailed description

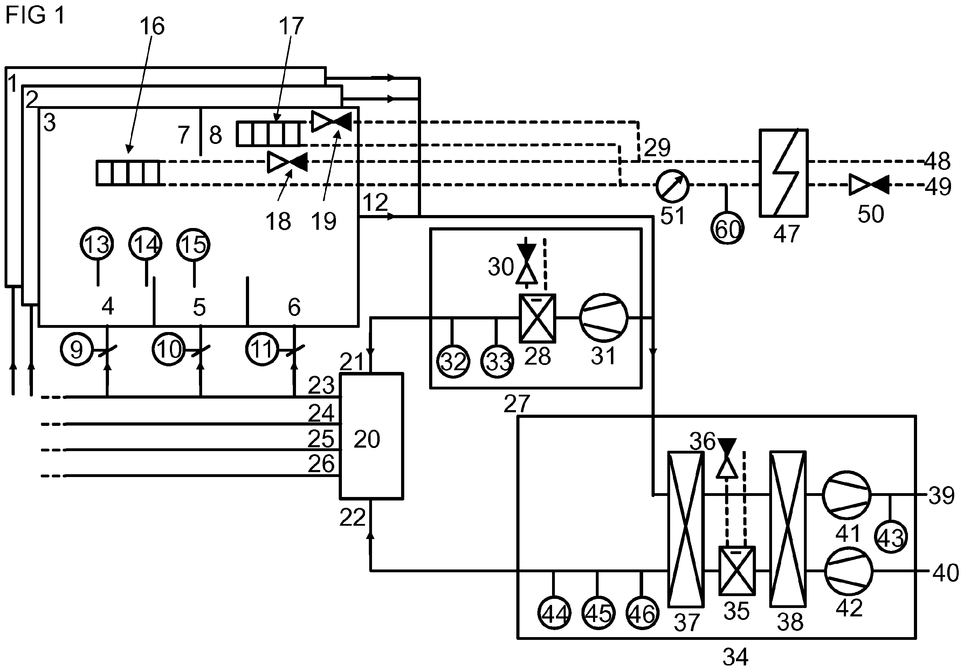

FIG 1 gives details of a heating, air-conditioning and / or ventilation (HVAC) installation according to the instant disclosure. A HVAC installation is typically installed in a structure such as a commercial, residential and / or industrial building. The structure of FIG 1 comprises a plurality of spaces 1, 2, 3 such as rooms. According to an aspect, the structure comprises a single space. Condensation is an issue for a wide range of typical building applications. It is also an issue in applications such as (gas-insulated) electric substations (with high-voltage equipment). A HVAC installation according to the instant disclosure may advantageously be installed in a building with a (gas-insulated) electric substation.

A space 1, 2, 3 provides a plurality of variable air volume segments 4, 5, 6. According to an aspect, at least one space 1 - 3 forms a single variable air volume segment. The variable air volume segments are part of the air cooling system of the structure.

In addition to air cooling, the space 3 shown on FIG 1 also provides two refrigerant cooling segments 7, 8. In an embodiment, water is employed as a refrigerant. In another embodiment, a blend of water and of an antifreeze agent such as glycol is employed as a refrigerant. The refrigerant may, by way of non-limiting example, also be a R-401A, R-404A, R-406A, R-407A, R-407C, R-408A, R-409A, R-410A, R-438A, R-500, or a R-502 blend.

The number of refrigerant cooling segments 7, 8 needs not match the number of variable air volume segments 4, 5, 6. According to an aspect, a space of the structure provides a single variable air volume segment and a single refrigerant cooling segment. According to another aspect, at least one space 1 - 3 has a single variable air volume segment and multiple refrigerant cooling segments. According to yet another aspect, at least one space 1 - 3 comprises a single refrigerant cooling segment and multiple variable air volume segments. In a preferred embodiment, there is a least one space with at least one variable air volume segment and with at least one refrigerant cooling segment.

In the exemplary embodiment shown on FIG 1, each variable air segment 4, 5, 6 comes with an inlet duct. Each inlet duct is in fluid communication with space 3. Each duct optionally comes with a control valve and / or with a damper 9, 10, 11. The control valves and / or dampers 8, 10, 11 function to control the amount of fluid conveyed into space 3.

The structure also provides at least one space 3 with an extract air duct 12. Extract air duct 12 is in fluid communication with the space 3. Extract air duct 12 is also in fluid communication with the exterior of the structure. Fluids (such as air) flow out of the space 3 via exhaust duct 12. The combination of supply air ducts and extract air duct 12 also allows purging air in space 3 thereby maintaining hygiene.

A plurality of sensors 13, 14, 15 is installed in space 3. These sensors 13, 14, 15 are employed to take readings of temperature, of moisture, of dew point, of relative and / or absolute pressure etc. It is also envisaged to employ sensors 13, 14, 15 that take readings of quantities related to air quality such as $CO_2$ concentration or volatile organic compounds. According to an aspect, at least one sensor 13, 14, 15 is a constrained sensor (with radio frequency and / or energy harvesting modules).

Sensors 13, 14, 15 send their signals to a controller. No signal paths are shown on FIG 1. Sensors 13, 14, 15 connect to a controller via a suitable bus. Suitable busses are, by way of non-limiting example, power over ethernet busses. It is envisaged that a bus does not only function to transmit analog or digital signals but also to supply sensors 13, 14, 15 with (up to 25.5 Watts of) power.

Each refrigerant cooling segment 7, 8 provides at least one cooling unit 16, 17. It is envisaged that the at least one cooling unit 16, 17 comprises a cooling battery and / or a chilled ceiling and / or a chilled beam (active or passive). The cooling units 16, 17 of the HVAC system connect to a refrigerant circuit where they absorb cold. The cooling units then release cold into the space 3. According to an aspect, each refrigerant cooling segment also comes with a moisture sensor and / or with a dew point sensor. The moisture sensor and / or the dew point sensor may in an exemplary embodiment be mounted to the cooling units 16, 17. It is envisaged that cooling units 16, 17 form integrated units and provide multiple functionalities such as heating, cooling, sensors, interfaces and / or connectors for refrigeration circuits, sensors, (electric) power, (aspirated) smoke detectors etc. In a particular embodiment, the cooling units 16, 17 also provide lighting.

Cooling units 16, 17 connect to refrigerant circuit via valves 18, 19. Valves 18, 19 are control valves and connect to a controller. FIG 1 indicates no signal paths. It is envisaged that control valves 18, 19, dampers 9, 10, 11, and sensors 13, 14, 15 all connect to the same controller.

Control valves 18, 19 connect to the controller via suitable bus. Suitable busses are, by way of non-limiting example, power over ethernet busses. It is envisaged that a bus does not only function to transmit analog or digital signals but also supplies the valves 18, 19 with (up to 25.5 Watts of) power. The same considerations apply to dampers 9, 10, 11.

The (gaseous) fluid circuit provides a distribution unit 20. Distribution unit 20 provides at least two inlet ports 21, 22. A first inlet port 21 is employed for indoor fluid (indoor air) to flow into distribution unit 20. A second inlet port 22 is employed for outdoor fluid (outdoor air) to flow into distribution unit 20. Distribution unit 20 thus collects both indoor fluid and outdoor fluid. Distribution unit 20 mixes these fluids depending on demand. It is envisaged that distribution unit 20 provides dampers in order for distribution unit 20 to set a mixing ratio between indoor fluid and outdoor fluid. It is also envisaged that distribution unit 20 provides non-return dampers that direct a fluid such as air into the desired direction.

Distribution unit 20 comes with at least one outlet port. A total of four outlet ports 23 - 26 are shown on FIG 1. Distribution unit 20 provides fluid paths from each of the inlet ports 21 - 22 to each of the outlet ports 23 - 26. The outlet ports 23 - 26 connect to ducts that guide a fluid such as air from distribution unit 20 into spaces 1 - 3.

At certain times of the year, a transition from comfort mode to economy mode may require no or little dehumidification. It is envisaged that in such situations the distribution unit 20 directs outside fluid (outside air) into at least one space 1 - 3 of the structure. The fluid inside the at least one space 1 - 3 is thus purged and / or hygiene is maintained.

In an embodiment, moisture sensors and / or by dew point sensors installed inside and / or outside the structure provide signals. Quantities relating to humidity inside the structure and outside structure are then derived from the readings of such sensors. Those quantities may indicate that outside fluid is less humid (has less latent heat) than the fluid inside one of the spaces 1 - 3.

Distribution unit 20 and dampers 9 - 11 may vent a space 1 - 3 with outside air in order to reduce levels of moisture. It is also envisaged that a power over ethernet bus supplies distribution unit 20 with (up to 25.5 Watts of) power.

Inlet port 21 of distribution unit 20 connects to a fan coil unit 27 via another duct. Fan coil unit 27 comprises a heat exchanger 28. The cooling coil 28 of FIG 1 transfers heat between a fluid such as air and a refrigerant such as water. It is envisaged that the cooling coil 28 is fitted with and / or provides at least one cold meter (in communication with a controller, preferably in communication with a central controller).

In an embodiment, heat exchanger 28 connects to a separate refrigerant circuit. It is also envisaged to employ a heat exchanger 28 wherein heat is exchanged between a first fluid such as inside air and a second fluid such as air.

Fan coil unit 27 also provides a fluid conveyor 31 such as a fan and / or a blower. Fluid mover 31 conveys a fluid such as air through the fan coil unit 27. In particular, fluid conveyor 31 conveys a fluid such as air through heat exchanger 28 and toward distribution unit 20. According to an aspect, the speed of fan 31 is set via pulse-width modulation. According to another aspect, an inverter sets the speed of fan 31. The speed of fan 31 then corresponds to and / or is associated with the frequency of the alternating current produced by the inverter.

Fan coil unit 27 comprises a plurality of sensors 32 - 33. These sensors 32 - 33 are advantageously arranged inside the duct that connects fan coil unit 27 to the inlet port 21 of distribution unit 20. The sensors 32 - 33 ideally comprise a temperature sensor and / or a moisture sensor and / or a dew point sensor and / or a sensor for air quality, in particular a sensor for volatile organic compounds, and / or a flow sensor for measuring mass flow and / or volume flow and / or a combination thereof. According to an aspect, a mass flow sensor such as an OMRON® type D6F-W sensor or a SENSOR TECHNICS® type WBA sensor is employed. The useful range of these mass flow sensors starts at velocities as low as 0.01 m/s or as low as 0.1 m/s. The upper limit of the useful range typically is 5 m/s or 10 m/s, in some cases 15 m/s or 20 m/s, or even 100 m/s. In other words, these sensors allow measurements wherein lower limits for velocities such as 0.1 m/s are combined with upper limits such as 5 m/s, 10 m/s, 15 m/s, 20 m/s, or even 100 m/s. This list is not exhaustive.

In an embodiment, a signal obtained from a flow sensor 32 - 33 is employed to control the capacity of fluid conveyor 31. A (proportional, integral and / or derivative) controller in communication with flow sensor 32 - 33 and with fluid conveyor 31 can thus control flow through fan coil unit 27 in accordance with a set point.

It is envisaged that sensors 32 - 33 and actuators 30, 31 of fan coil unit 27 connect to a controller. Controller also sends instructions to actuators 30, 31. Control valve 30 actuates its (internal) valve member in accordance with such instructions. The cooling and / or heating capacity produced by heat exchanger 28 is a function of the (axial) position of the valve member of valve 30.

Controller also receives signals from the sensors 32 - 33. According to an aspect, sensors 32 - 33, and actuators 30 - 31 connect to the same controller as sensors 13 - 15, dampers 9 - 11, control valves 18 - 19, and distribution unit 20. It is envisaged that a power over ethernet bus transmits signals to and from the fan coil unit 27. It is also envisaged that a power over ethernet bus supplies members 28, 30 - 33 of fan coil unit 27 with (up to 25.5 Watts of) power.

A fluid path for indoor air is formed by fan coil unit 27, distribution unit 20, dampers 9 - 11 as well as by the ducts and ports 4 - 6, 12, 21, 23 - 26 in between these members. Fluid mover 31 conveys a fluid out of the space 3, through the fan coil 27 and distribution units 20 and back into the space 3. A heat exchanger 28 is arranged in the fluid path to heat and / or to cool the fluid.

Coil 28 may also function to dehumidify an indoor fluid (air). To that end, coil 28 dehumidifies the fluid to a temperature that entails condensation of the moisture in the fluid. The process of dehumidification through heat exchanger 28 is also known as removal of latent heat. The process generally involves cooling the fluid to a temperature below the dew point temperature of the extract air.

The system of FIG 1 comprises an outside fluid unit 34 in addition to the fluid path 27, 20, 9 - 12 for inside fluid. The outside fluid unit 34 provides a fluid path from the outside of the structure to the spaces 1 - 3 of the structure. The outside fluid system connects to exhaust connector 12 of space 3 via a duct. The outside fluid system 34 also connects to the inlet port 22 of distribution device 20 via another duct.

Outside air unit 34 comprises a first heat exchanger 35. The coil 35 of FIG 1 transfers heat between a fluid such as outside air and a refrigerant such as water. To that end, outside air unit 34 connects a refrigerant circuit via control valve 36. The cooling and / or heating capacity produced by coil 35 may be set via control valve 36. It is envisaged that coil 35 is fitted with and / or provides at least one cold meter (in communication with a controller, preferably in communication with a central controller).

The heat exchanger 35 of the outside air unit 34 is shown on FIG 1 and connects to a (separate) refrigerant circuit. It is also envisaged to employ a heat exchanger 35 wherein heat is exchanged between a first fluid such as outside air and a second fluid such as air.

Outside fluid unit 34 also comprises second and third heat and / or humidity exchangers 37, 38. The heat exchangers 37, 38 of FIG 1 transfer heat between a fluid such as exhaust air in the exhaust duct 39 and fluid such as outside air in the inlet duct 40.

Heat exchangers 37, 38 comprise heat recovery wheels (for heat and humidity transfer). It is also envisaged to employ heat exchangers 37, 38 with plate heat exchangers. These heat exchangers transfer heat only. It is further envisaged to employ heat exchangers 37, 38 with desiccant wheels. Desiccant wheels function to transfer both heat and moisture. According to a further aspect, heat exchangers 37, 38 comprise coil to coil heat exchangers. Coil to coil heat exchangers transfer heat only. The skilled person also employs suitable combinations of the above mentioned heat exchangers.

Outside air unit 34 further comprises a fluid conveyor 41 for exhaust fluid and / or a fluid conveyor 42 for inlet fluid. In an embodiment, fluid conveyor 41 for exhaust fluid comprises a fan and / or a blower. According to an aspect, the speed of fan 41 is set via pulse-width modulation. According to another aspect, an inverter sets the speed of exhaust fan 41. The speed of exhaust fan 41 then corresponds to and / or is associated with the frequency of the alternating current produced by the inverter. According to an aspect, fluid conveyor 42 for inlet fluid comprises a fan and / or a blower. According to an aspect, the speed of fan 42 is set via pulse-width modulation. According to another aspect, an inverter sets the speed of inlet fan 42. The speed of inlet fan 42 then corresponds to and / or is associated with the frequency of the alternating current produced by the inverter.

A sensor 43 is arranged near the exit of exhaust duct 39. In a preferred embodiment, sensor 43 is a flow sensor for capturing mass flow and / or volume flow through duct 39. It is also envisaged that sensor 43 is temperature sensor and / or a moisture sensor and / or a dew point sensor and / or a sensor for air quality, in particular a sensor for volatile organic compounds, and / or a flow sensor and / or a combination thereof. According to an aspect, a mass flow sensor such as an OMRON® type D6F-W sensor or a SENSOR TECHNICS® type WBA sensor is employed. The useful range of these mass flow sensors starts at velocities as low as 0.01 m/s or as low as 0.1 m/s. The upper limit of the useful range typically is 5 m/s or 10 m/s, in some cases 15 m/s or 20 m/s, or even 100 m/s. In other words, these sensors allow measurements wherein lower limits for velocities such as 0.1 m/s are combined with upper limits such as 5 m/s, 10 m/s, 15 m/s, 20 m/s, or even 100 m/s. This list is not exhaustive.

A plurality of sensors 44 - 46 is installed inside the duct between outside fluid unit 34 and inlet port 22 of distribution device 20. The sensors 44 - 46 ideally comprise a temperature sensor and / or a moisture sensor and / or a dew point sensor and / or a sensor for air quality, in particular a sensor for volatile organic compounds, and / or a flow sensor for measuring mass flow and / or volume flow and / or a combination thereof. According to an aspect, a mass flow sensor such as an OMRON® type D6F-W sensor or a SENSOR TECHNICS® type WBA sensor is employed. The useful range of these mass flow sensors starts at velocities as low as 0.01 m/s or as low as 0.1 m/s. The upper limit of the useful range typically is 5 m/s or 10 m/s, in some cases 15 m/s or 20 m/s, or even 100 m/s. In other words, these sensors allow measurements wherein lower limits for velocities such as 0.1 m/s are combined with upper limits such as 5 m/s, 10 m/s, 15 m/s, 20 m/s, or even 100 m/s. This list is not exhaustive.

It is envisaged that the sensors 43 - 46 and the actuators 35 - 38, 41 - 42 of the outside fluid unit 34 connect to a controller. Controller also sends instructions to actuators 35 - 38, 41 - 42. Control valve 36 actuates its (internal) valve element in accordance with such instructions. The cooling and / or heating capacity produced by coil 35 is a function of the (axial) position of the valve member of valve 36. Fluid conveyors 41, 42 set their capacities (fan speeds and / or blower speeds) in accordance with instructions from controller. Flow through the ducts 39 and / or 40 is a function of the capacities of fluid conveyors 41 and / or 42.

Controller also receives signals from the sensors 43 - 46. According to an aspect, sensors 43 - 46, and actuators 35 - 38, 41 - 42 connect to the same controller as sensors 13 - 15, dampers 9 - 11, control valves 18 - 19, and distribution unit 20. It is envisaged that a power over ethernet bus transmits signals to and from the outside fluid unit 34. It is also envisaged that a power over ethernet bus supplies members 35 - 46 of outside fluid unit 34 with (up to 25.5 Watts of) power.

In an embodiment, a signal obtained from a flow sensor 43 is employed to control the capacity of fluid conveyor 41. A (proportional, integral and / or derivative) controller in communication with flow sensor 43 and with fluid conveyor 41 can thus control flow through outlet duct 39 in accordance with a set point.

In an embodiment, a signal obtained from a flow sensor 44 - 46 is employed to control the capacity of fluid conveyor 42. A (proportional, integral and / or derivative) controller in communication with flow sensor 44 - 46 and with fluid conveyor 42 can thus control flow through inlet duct 40 in accordance with a set point.

The refrigeration circuit 29 shown on FIG 1 also comprises a heat exchanger 47. Heat exchanger 47 transfers heat between a refrigerant inside inlet duct 48 and a refrigerant in outlet duct 49. It is envisaged that the refrigeration circuit 29 is fitted with and / or provides at least one cold meter (in communication with a controller, preferably in communication with a central controller).

A control valve 50 installed in the refrigerant circuit 29 controls and / or regulates (refrigerant) flow through heat exchanger 47. It is envisaged that at least one control valve 18, 19, 30, 36, 50 sets the (axial) position of its valve member in response to a pulse-width modulated signal. In an embodiment, control valve 50 sets the (axial) position of its valve member in response to a pulse-width modulated signal.

The refrigerant circuit 29 also comprises a pump 51. The pump 51 optionally comprises a sensor such as a flow sensor and / or a temperature sensor and / or a moisture sensor.

It is envisaged that any sensor 60 and any actuators 50 - 51 of the refrigerant circuit 29 connect to a controller. Controller also sends instructions to actuators 50 - 51. Control valve 50 actuates its (internal) valve member in accordance with such instructions.

It is envisaged that controller also receives signals from a sensor. According to an aspect, any sensor(s) 60 and actuators 50 - 51 connect to the same controller as sensors 13 - 15, dampers 9 - 11, control valves 18 - 19, and distribution unit 20. It is envisaged that a power over ethernet bus transmits signals to and from sensor(s) 60 and actuators 50, 51. It is also envisaged that a power over ethernet bus supplies members 50 - 51 of refrigerant circuit 29 with (up to 25.5 Watts of) power.

In an embodiment, a signal obtained from a flow sensor is employed to control the (axial) position of control valve 50. A (proportional, integral and / or derivative) controller in communication with flow sensor 51 and with control valve 50 can thus be employed to control flow through refrigerant circuit 29.

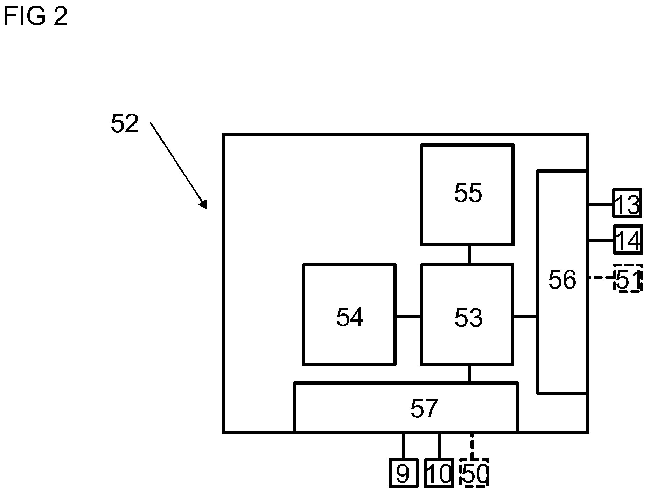

Now referring to FIG 2, a controller 52 for a HVAC installation is shown schematically. Controller 52 comprises a processor 53 and a memory 54. Controller 52 optionally also comprises a display 55. Processor 53 (bidirectionally) communicates with memory 54 and / or with display 55 via suitable interfaces.

Memory 54 advantageously stores data relevant to the operation of the HVAC system such as lookup tables, curves, piecewise defined functions etc. Processor 53 then reads these data from memory 54.

Display 55 could, by way of non-limiting example, be a monochrome display, a grayscale display, or a color screen with suitable resolution. Suitable resolutions include, but are not limited to, 426 x 320 pixels, 470 x 320 pixels, 640 x 480 pixels, or 960 x 720 pixels etc. The display may, for instance, be a liquid crystal screen, a cathode ray tube monitor, and / or a screen made of organic light-emitting diodes.

Controller 52 further comprises an input card 56. Input card 56 enables (bidirectional) communication between sensors 13 - 15, 32 - 33, 43 - 46, 51 of a HVAC installation and processor 53. It is envisaged that input card 56 connects to (reads signals from) sensors 13 - 15, 32 - 33, 43 - 46, 51 via power over ethernet cables. To that end, input card 56 provides suitable connectors. Sensors 13 - 15 also come with suitable connectors and / or with suitable interfaces. The skilled person understands that suitable interfaces may include analog to digital converters.

Controller 52 further comprises an output card 57. Output card 57 enables (bidirectional) communication between actuators 9 - 11, 18 - 20, 35 - 38, 47, 50 of a HVAC installation and processor 53. It is envisaged that output card 57 connects to (sends instructions to) actuators 9 - 11, 18 - 20, 35 - 38, 47, 50 via power over ethernet cables. To that end, output card 57 provides suitable connectors. Actuators 9 - 11, 18 - 20, 35 - 38, 47, 50 also come with suitable connectors and / or with suitable interfaces. The skilled person understands that suitable interfaces may include digital to analog converters.

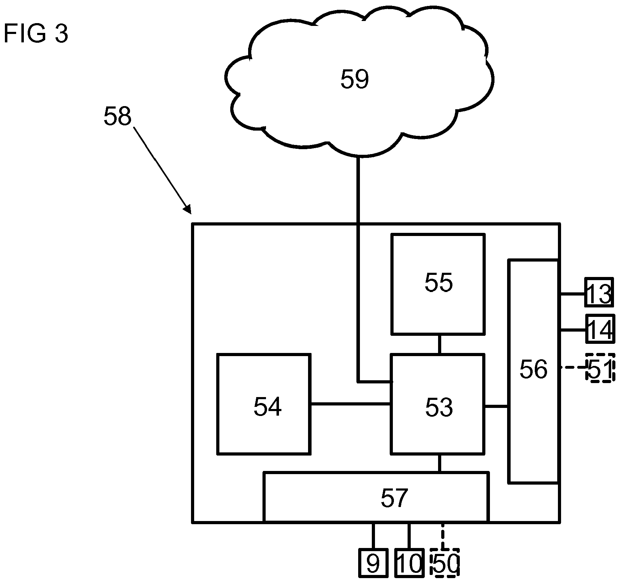

Now referring to FIG 3, a particular type of controller 59 is schematically depicted. Controller 58 of FIG 3 provides all the components of controller 52 of FIG 2. Controller 58 additionally comes with a connection to an external cloud computer 59.

Cloud computer 59 is advantageously located at a site remote from controller 58. Cloud computer 59 is preferably also located at a site remote from the HVAC installation of FIG 1. In an embodiment, cloud computer 59 connects to controller 58 via an internet connection.

Controller 58 then provides suitable interfaces that enable communication between controller 58 and cloud computer 59. In an embodiment, controller 58 downloads data from cloud computer 59 in accordance with the file transfer protocol and / or by using a secure copy command.

According to an aspect, controller 58 downloads lookup tables, curves, piecewise defined functions etc from cloud computer 59. Processor 53 then reads the data downloaded from cloud computer 59. Ideally processor 53 can also replace existing lookup tables, curves, piecewise defined functions in the memory 54 with new ones downloaded from cloud computer 59.

The relationship between cooling capacity of coil 28 and power intake of coil 28 is generally not linear. Also, the relationship between the capacity of fluid conveyor 31 and power intake of fluid conveyor 31 is generally not a linear relationship. The same considerations apply to the relationships between cooling capacities and energy cost. In an embodiment, the cooling capacity of the fluid conveyor 31 and / or the cooling capacity of the coil 28 are set via a lookup table. The lookup table comprises entries that map cooling capacities of members 28, 31 to power intake and / or energy cost. In another embodiment, the lookup table joins the entries for the cooling capacities of the members 28, 31. The lookup table with joined entries thus maps combined cooling capacities of members 28, 31 to power intake and / or energy cost.

The system advantageously operates such that the cost of energy required to achieve a target dehumidification is minimized. To that end, a controller sums up (integrates) amounts of power intake and / or of energy cost to arrive at a total amount of energy and / or at a total cost. The controller determines the total amount of energy and / or the total cost associated with various dehumidification capacities of the coil 28 and / or of the fluid conveyor 31. The controller thus determines a table that maps settings (capacities) of the coil 28 and / or of the fluid conveyor 31 to an amount of energy and / or a total cost. Controller picks the entry from the table that minimizes the total amount of energy and / or the total cost for a given target dehumidification. Controller then sets and / or controls the capacities of members 28, 31 in accordance with aforesaid entry.

In an alternate embodiment, controller relies on mathematical relationships to map dehumidification capacities of the members 28, 31 to total amounts of energy and / or to energy cost. The mathematical relationships may, by way of non-limiting example, involve polynomials. The mathematical functions may, also by way of non-limiting example, involve functions that are defined piecewise. According to a related aspect, controller stores curves that describe dehumidification capacities of the members 28, 31 versus total amounts of energy and / or versus energy cost.

It is also envisaged that controller uses a genetic algorithm and / or a gradient descent algorithm to determine dehumidification capacities associated with minimum power intake and / or with minimum cost. In an alternate embodiment, fuzzy logics and / or neural networks are employed to minimize power intake and / or energy cost. The skilled person chooses a neural network with a suitable number of layers. The skilled person also trains the neural network with suitable data. It is further envisaged that the system uses a mixed-integer optimization algorithm to minimize the cost of energy and / or the power intake required to achieve target dehumidification.

The process of determining minimum total energy and / or minimum cost involves at least two boundary conditions. The first boundary condition is a target for moisture removal. This target typically depends on a set point and / or on a permissible deviation from the set point while in comfort mode. The second boundary condition is the maximum duration of the transition from economy mode to comfort mode. The change to comfort mode must typically be complete at a given point in time. This point in time limits the duration of the transition. Additional boundary conditions may apply such as boundary conditions for temperature.

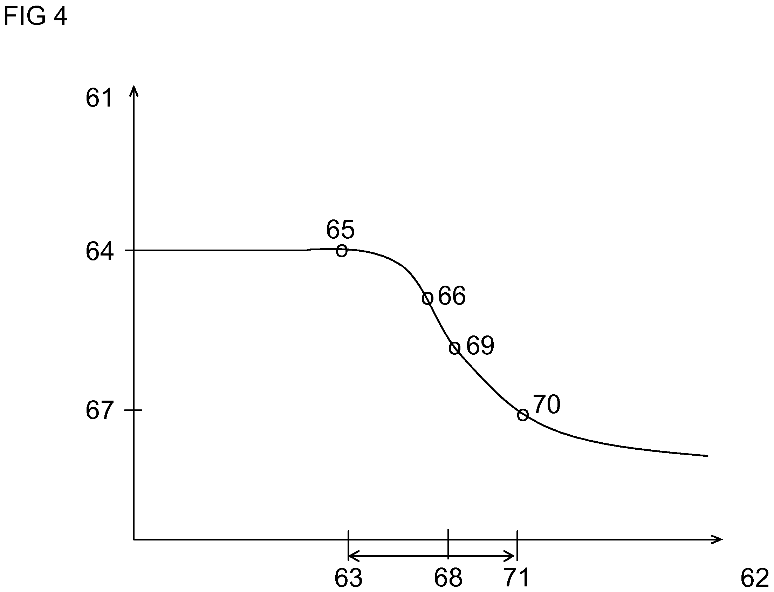

Now referring to FIG 4, a decline of moisture 61 versus time 22 is shown for a space 1 - 3 of a building. The process of dehumidification commences at some point in time 63. The process of dehumidification may, for instance, start at 4 a.m. in the morning. At that time, the level of moisture and / or latent heat in the space 1 - 3 corresponds to level 64. The level related to latent heat in the space 1 - 3 is advantageously derived by measurement 65 from the sensors 13 - 15. Some time such as 30 minutes later, another measure 66 related to latent heat is obtained from the sensors 13 - 15. The level related to latent heat at point 66 is yet above the target value 67, so the process of dehumidification continues. At point in time 68, levels related to latent heat 69 are still above target 67. Another measurement 70 may, by way of non-limiting example, be carried out at 6 a.m. in the morning. At this point in time 71, the measured amount of latent heat is below target 67. Therefore the dehumidification startup phase is concluded. The HVAC system is now ready to switch to a different mode. The system may, for instance, switch from economy mode to comfort mode.

Any steps of a method according to the present disclosure may be embodied in hardware, in a software module executed by a processor, in a cloud computing arrangement, or in a combination of these. The software may include a firmware, a hardware driver run in the operating system, or an application program. Thus, the disclosure also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other information technology equipment and appliance.

In other words, the instant disclosure teaches a method for controlling a HVAC installation for at least one space (1 - 3) in accordance with a target value related to latent heat, the HVAC installation comprising at least one inlet duct, the at least one inlet duct in fluid communication with the at least one space (1 - 3), a plurality of sensors (13 - 15) comprising at least one sensor (13 - 15) inside the at least one space (1 - 3) and at least one fan coil unit (27, 34) configured to remove latent heat from a fluid flowing through the at least one inlet duct and into the at least one space (1 - 3), the method comprising the steps of:

> reading first signals from each sensor of the plurality of sensors (13 - 15);
> deriving a first plurality of measured quantities from the first signals;
> determining a first amount related to latent heat as a (direct) function of the first plurality of measured quantities;
> starting up operation of the at least one fan coil unit (27, 34) and recording a time of the startup (63);
> during operation of the at least one fan coil unit (27, 34) reading second signals from each sensor of the plurality of sensors (13 - 15);
> deriving a second plurality of measured quantities from the second signals;
> determining a second amount related to latent heat as (direct) a function of the second plurality of measured quantities;

if the determined second amount related to latent heat is less than or equal to the target value related to latent heat:

> recording a time of completion (71);
> calculating an amount of time required for latent heat removal by subtracting from the recorded time of completion (71) the recorded time of startup (63);
> using the calculated amount of time required for latent heat removal and the first amount related to latent heat (and optionally the target value) to empirically determine a dependence of amounts of time required for latent heat removal on amounts related to latent heat;
> operating the at least one fan coil unit (27, 34) in accordance with the empirically determined dependence.

In an embodiment, the amount related to latent heat is an amount of latent heat and / or an amount indicative of latent heat. In another embodiment, the amount of latent heat is (a measure of) absolute humidity. In an embodiment, the amounts related to latent heat are amounts of latent heat and / or amounts indicative of latent heat. In another embodiment, the amounts related to latent heat are (measures of) absolute humidity

It is envisaged that the time of the startup (63) is determined and / or recorded. In an embodiment, the HVAC system comprises a clock and the time of the startup (63) is determined using the clock and / or taking a clock reading.

It is envisaged that the time of completion (71) is determined and / or recorded. In an embodiment, the HVAC system comprises a clock and the time of completion (71) is determined using the clock.

In a sophisticated embodiment, the plurality of sensors (13 - 15) comprises at least one sensor outside the at least one space (1 - 3). The at least one space (1 - 3) may, in particular, be part of a structure such as a building and the at least one sensor outside the at least one space (1 - 3) be installed outside the structure and / or be outside the building.

According to another aspect, the HVAC installation comprises at least one fluid conveyor such as at least one fan. The at least one fan may, in particular, not be (directly) mounted to and / or affixed to a coil. The at least one fan that is not (directly) mounted to and / or affixed to a coil thus is at least one fan isolated from a coil. The aforementioned method preferably also comprises the step of operating the at least one isolated fluid conveyor and / or the at least one isolated fan in accordance with the empirically determined dependence.

According to an aspect, the time of startup is determined and or recorded when or substantially when starting up operation of the at least one fan coil unit (27, 34). According to an aspect, the time of completion is determined and or recorded when or substantially when shutting down operation of the at least one fan coil unit (27, 34).

The method also advantageously comprises the step of stopping the at least one fan coil unit (27, 34) upon and / or when recording a time of completion (71). Alternatively, the method comprises the step of switching a mode of operation of the at least one fan coil unit (27, 34) upon and / or when recording a time of completion (71).

It is envisaged that during operation of the at least one fan coil unit (27, 34) a second plurality of measured quantities is determined from the second signals. It is also envisaged that during operation of the at least one fan coil unit (27, 34) a second amount related to latent heat as a (direct) function of the second plurality of measured quantities is determined and / or calculated and / or computed.

According to an aspect, the calculated amount of time required for latent heat removal and the first amount related to latent heat is used and / or employed and / or capitalized on and / or harnessed to empirically determine and / or calculate and / or compute a dependence of (an) amount(s) of time required for latent heat removal on (an) amount(s) of latent heat.

Any of the aforementioned methods may also comprise further steps to empirically determine and / or refine the dependence of amounts of time required for latent heat removal on amounts related to latent heat. These steps comprise a plurality of cycles, each cycle comprising the steps of:

reading further signals from each sensor of the plurality of sensors (13 - 15);
deriving a further plurality of measured quantities from the further signals;
determining a further amount related to latent heat as a (direct) function of the further plurality of measured quantities;
starting up operation of the at least one fan coil unit (27, 34) and recording a further time of the startup;
during operation of the at least one fan coil unit (27, 34) reading still further signals from each sensor of the plurality of sensors (13 - 15);
deriving a still further plurality of measured quantities from the still further signals;
determining a still further amount related to latent heat as a (direct) function of the still further plurality of measured quantities;
if the determined still further amount related to latent heat is less than or equal to the target value related to latent heat:

recording a further time of completion;
calculating a further amount of time required for latent heat removal by subtracting from the further recorded time of completion the further recorded time of startup;
using the calculated further amount of time required for latent heat removal and the further amount related to latent heat to empirically determine and / or to refine the dependence of amounts of time required for latent heat removal on amounts related to latent heat.

It is still further envisaged that sets of values are formed in these cycles (in each cycle), wherein each sets of values comprises

a timestamp and
an amount related to latent heat and
an amount of time required for removal of the amount related to latent heat and
optionally a weight factor.

The empirical determination and / or refinement of the dependence of amounts of time required for latent heat removal on amounts related to latent heat may, in particular, involve assigning different weights (weight factors) to at least two sets of values;
each set of values comprising a timestamp and an amount related to latent heat and an amount of time required for removal of the amount related to latent heat and optionally a weight factor; and

wherein sets of values are compared based on their timestamps and older sets of values are assigned lower weights that than newer sets of values (such as lower by a factor two);

such that the impact of older sets of values on the empirically determined dependence is less than the impact of newer sets of values on the empirically determined dependence.

The instant disclosure also teaches any of the aforementioned methods, wherein the dependence is empirically calculated and / or computed and / or determined by or by calculating and / or computing and / or determining a characteristic curve which fits the determined amount(s) of time required for latent heat removal and the (first) amount(s) related to latent heat.

A fitting algorithm such as a Marquardt-Levenberg algorithm and / or a genetic algorithm and / or a neural network, in particular a neural network trained via least mean squares, may be employed therefore. In a particular embodiment, the characteristic curve is computed and / or determined by fitting a model and / or a curve supplied by an equipment manufacturer to the determined amount(s) of time required for latent heat removal and to the (first) amount(s) related to latent heat.

The characteristic curve may be a two-dimensional curve. In a particular embodiment, a characteristic surface may be employed as a characteristic curve. The characteristic surface fits the determined amount(s) of time required for latent heat removal dependent on two variables. The first variable may be related to (an) amount(s) of latent heat inside the building. The second variable may be related to (an) amount(s) of latent heat outside the building. In another particular embodiment, a characteristic function is employed as a characteristic curve. The characteristic function fits the determined amount(s) of time required for latent heat removal dependent on more than two variables.

The instant disclosure also teaches any of the aforementioned methods, wherein the characteristic curve maps (an) amount(s) of latent heat to (an) amount(s) of time required for latent heat removal.

The instant disclosure also teaches any of the aforementioned methods, wherein the characteristic curve maps differences between first and second amounts related to latent heat to amounts of time required for latent heat removal.

According to an aspect, the characteristic curve constitutes a linear map. A linear map of a variable x to another variable y = f(x) satisfies the conditions

$$y = f(x) = a \cdot x,$$

and

$$y = f(e+f) = a \cdot (e+f),$$

and

wherein a is a constant and e and f are arguments. A linear map does, in particular, satisfy the condition

$$0 = f(0) = a*0.$$

According to another aspect, the characteristic curve constitutes an affine map or transformation. An affine map or transformation of a variable x to another variable y = f(x) satisfies the conditions

$$y = f(x) = a \cdot x + b,$$

wherein a and b are constants.

The constants a and b will be fitted by the fitting procedure mentioned above. Generally, a and b are fitted by a fitting algorithm such that the sum of squares between the characteristic curve and any point made up of the determined amount of time required for latent heat removal and the first amount related to latent heat becomes minimal. In an embodiment, there is more than one point with each point being defined by a set of values comprising a determined amount of time required for latent heat removal and a first amount related to latent heat.

The instant disclosure also teaches any of the aforementioned methods, wherein the at least one fan coil unit (27, 34) comprises a coil and fan with an adjustable speed and wherein the coil has a maximum capacity for removal of latent heat, and wherein operating the at least one fan coil unit (27, 34) in accordance with the empirically determined dependence comprises the step of:

limiting the speed of the fan such that an amount of latent heat conveyed by the flow of the fluid through the at least one inlet duct remains below the maximum capacity for removal of latent heat.

Ideally, the HVAC installation also comprises at least one sensor installed in the at least one inlet duct and the method comprises the steps of

reading an inlet duct signal from the at least one sensor installed in the at least one inlet duct;

deriving an amount of latent heat conveyed by the flow of the fluid through the at least one inlet duct from the inlet duct signal.

The instant disclosure also teaches any of the aforementioned methods, wherein the characteristic curve is calculated by minimizing the deviation and / or the distance between the characteristic curve and the determined amount of time required for latent heat removal and the first amount related to latent heat.

The instant disclosure also teaches any of the aforementioned methods, wherein the at least one fan coil unit (27, 34) is operated in accordance with the empirically determined dependence by

reading third signals from each sensor of the plurality of sensors (13 - 15);

deriving a third plurality of measured quantities from the third signals;

determining a third amount related to latent heat as (direct) a function of the third plurality of measured quantities;

using the empirically determined dependence to calculate forecast value of an amount of time from the third amount related to latent heat;

operating the at least one fan coil unit (27, 34) in accordance with the calculated forecast value.

According to an aspect, the forecast value is calculated and / or computed and / or determined.

The instant disclosure also teaches any of the aforementioned methods, wherein the at least one fan coil unit (27, 34) is operated in accordance with the calculated forecast value by:

> calculating a scheduled time of startup from the calculated forecast value;
> sending a startup signal to the at least one fan coil unit (27, 34) at the scheduled time of startup;
> wherein the startup signal comprises an instruction to start up the fan coil unit (27, 34).

The instant disclosure also teaches any of the aforementioned methods, wherein the at least one fan coil unit (27, 34) is operated in accordance with the calculated forecast value by:

> calculating a scheduled time of startup from the calculated forecast value;
> starting up operation of the at least one fan coil unit (27, 34) at the scheduled time of startup.

According to an aspect, the HVAC installation is communicatively (directly) coupled to the at least one fan coil unit (27, 34). In an embodiment, the scheduled time of startup is calculated and / or determined and / or computed.

The instant disclosure also teaches any of the aforementioned methods, wherein the empirically determined dependence is an affine map of (an) amount(s) of latent heat to (an) amount(s) of time required for latent heat removal.

The instant disclosure also teaches any of the aforementioned methods, wherein the empirically determined dependence is a linear map of (an) amount(s) of latent heat to (an) amount(s) of time required for latent heat removal.

The instant disclosure also teaches any of the aforementioned methods, wherein the HVAC installation comprises at least one outlet duct in fluid communication with the at least one space (1 - 3).

The instant disclosure also teaches any of the aforementioned methods, the method comprising the steps of: reading a first signal from each sensor of the plurality of sensors (13 - 15);

deriving a first plurality of measured quantities from the first signals read from each sensor of the plurality of sensors (13 - 15);

determining a first amount related to latent heat as a (direct) function of the first plurality of measured quantities.

The instant disclosure also teaches any of the aforementioned methods, the method comprising the steps of: during operation of the at least one fan coil unit (27, 34) reading a second signal from each sensor of the plurality of sensors (13 - 15);

deriving a second plurality of measured quantities from the second signals read from each sensor of the plurality of sensors (13 - 15);

determining a second amount related to latent heat as a (direct) function of the second plurality of measured quantities.

It is envisaged that during operation of the at least one fan coil unit (27, 34) a second plurality of measured quantities from the second signals read from each sensor of the plurality of sensors (13 - 15) is determined. It is also envisaged that during operation of the at least one fan coil unit (27, 34) a second amount related to latent heat as a (direct) function of the second plurality of measured quantities is determined.

The instant disclosure also teaches any of the aforementioned methods, the method comprising the steps of: during operation of the at least one fan coil unit (27, 34) repeatedly until the determined fourth amount related to latent heat is less than or equal to the target value related to latent heat carrying out the steps of:

> reading fourth signals from each sensor of the plurality of sensors (13 - 15);
> deriving a fourth plurality of measured quantities from the fourth signals;
> determining a fourth amount related to latent heat as a (direct) function of the fourth plurality of measured quantities.

The instant disclosure also teaches any of the aforementioned methods, wherein the at least one fan coil unit (27, 34) comprises a coil and a fan with an adjustable speed and wherein the coil has a maximum capacity for removal of latent heat; and

wherein operating the at least one fan coil unit (27, 34) in accordance with the empirically determined dependence comprises the steps of:

> operating the speed of the fan such that dehumidification performance is maximized; and / or
> wherein the speed of the fan speed is calculated periodically using at least one trained characteristic function of the fan and / or of (a) dehumidification process(es) and / or a load value related to latent heat; and / or
> wherein periodical calculation of the fan speed involves using measurements (65 - 70) at particular points in time as inputs to train the at least one characteristic function; and / or

wherein periodical calculation of the fan speed also involves calculating values of dehumidification performance for a range of predefined values of fan speed and choosing the predefined value of fan speed that maximizes dehumidification performance.

It is envisaged that the maximum capacity of the coil for removal of latent heat is and / or represents a maximum amount of latent heat that can be removed by the coil per time. It is also envisaged that the load value related to latent heat is and / or represents an amount of latent heat introduced into a space and / or into a structure at a particular point in time. In a particular embodiment, the load value related to latent heat is derived from a (second, third, fourth and / or further) plurality of measured quantities. According to an aspect, the dehumidification performance is and / or represents an instantaneous amount of latent heat removed by the at least one fan coil unit (27, 34) in relation to the overall power intake. The overall power intake comprises the power intake of the at least one fan coil unit (27, 34). The overall power intake also comprises the power supplied to the least one fan coil unit (27, 34) via any inlet conduit connected to the at least one fan coil unit (27, 34), preferably adjusted by an efficiency of any component supplying the fan coil unit (27, 34). It is envisaged that the fan coil unit (27, 34) is supplied by a cold generation system.

The characteristic function of the latent heat load maps amount(s) related to latent heat in the room and outside to the dehumidification load.

In every calculation step within the startup phase, measurements for that point in time are used as inputs to the characteristic functions except modulation of the fan(s) for which a range/ranges of predefined values are used. The range(s) of predefined values might be equally spaced values between minimum and maximum fan speeds. For all predefined values, the dehumidification performance is calculated. Finally, the fan speed value(s) that maximizes the dehumidification performance is applied until the next calculation step.

Efficient fan speed operation may also be predetermined by design calculations, in particular if the measurements required for calculation are missing.

The instant disclosure also teaches any of the aforementioned methods, wherein the plurality of sensors (13 - 15) comprises at least one moisture sensor (13 - 15) disposed inside the at least one space (1 - 3) and at least one temperature sensor (13 - 15) disposed inside the at least one space (1 - 3).

According to an aspect at least one moisture sensor (13 - 15) is disposed inside the at least one space (1 - 3) or at least one temperature sensor (13 - 15) is disposed inside the at least one space (1 - 3).

According to an aspect at least one flow sensor (32 - 33) is disposed inside the at least one space (1 - 3) or inside the at least one inlet duct or inside the at least one outlet duct.

Advantageously, the first signals read from each sensor of the plurality of sensors (13 - 15), the second signals read from each sensor of the plurality of sensors (13 - 15), the third signals read from each sensor of the plurality of sensors (13 - 15), the fourth signals read from each sensor of the plurality of sensors (13 - 15), and the further signals read from each sensor of the plurality of sensors (13 - 15) are all mutually different.

The instant disclosure also teaches a non-transitory, tangible computer readable medium having instructions executable by a processor for performing the any of the aforementioned methods when said instructions are executed.

It should be understood that the foregoing relates only to certain embodiments of the disclosure and that numerous changes may be made therein without departing from and the scope of the disclosure as defined by the following claims. It should also be understood that the disclosure is not restricted to the illustrated embodiments and that various modifications can be made within the scope of the following claims.

Reference numerals

1 - 3 spaces (rooms) of a structure (of a building)
4 - 6 variable air volume segments
7 - 8 water cooling segments
9 - 11 control dampers with controlled actuators (optional)
12 extract air duct and interface thereto
13 - 15 sensors within space 3
16 - 17 cooling units
18 - 19 control valves for cooling units 16, 17
20 air distribution unit (hub)
21 inlet port for recirculation air
22 inlet port for outside air
23 - 26 outlets of distribution unit 20
27 fan coil unit (recirculation air unit)
28 heat exchanger (cooling coil)
29 refrigerant circuit
30 control valve for coil 28
31 (gaseous) fluid conveyor
32 - 33 sensors of fan coil unit 27
34 outside air system
35 heat exchanger (cooling coil)
36 control valve for coil 35
37 - 38 heat and / or humidity exchangers
39 exhaust air (duct)
40 outside air duct
41, 42 (gaseous) fluid conveyors
43 sensor(s) in exhaust air duct 39
44 - 46 sensors in outside air duct 40
47 heat exchanger
48 inlet pipe of refrigerant circuit 29
49 outlet pipe of refrigerant circuit 29

50 control valve
51 (variable speed) pump (optionally with a flow sensor and / or with a flow meter)
52 controller
53 processor
54 memory
55 display
56 input card
57 output card
58 controller with internet connection
59 cloud computer
60 sensor
61 amount relating to latent heat
62 time
63 time of the startup
64 first amount relating to latent heat
65 first measured quantity derived from the first signals
66 further measured quantities derived from further signals
67 second amount relating to latent heat
68 time of measurement 69
69 further measured quantities derived from further signals
70 second measured quantity from the second signals
71 time of completion

**Claims**

1. Method for controlling a HVAC installation for at least one space (1 - 3) in accordance with a target value related to latent heat, the HVAC installation comprising at least one inlet duct, the at least one inlet duct in fluid communication with the at least one space (1 - 3), a plurality of sensors (13 - 15) comprising at least one sensor (13 - 15) inside the at least one space (1 - 3), and at least one fan coil unit (27, 34) configured to remove latent heat from a fluid flowing through the at least one inlet duct and into the at least one space (1 - 3), the method comprising the steps of:

   reading first signals from each sensor of the plurality of sensors (13 - 15);
   deriving a first plurality of measured quantities from the first signals;
   determining a first amount related to latent heat as a function of the first plurality of measured quantities;
   starting up operation of the at least one fan coil unit (27, 34) and recording a time of the startup (63);
   during operation of the at least one fan coil unit (27, 34) reading second signals from each sensor of the plurality of sensors (13 - 15);
   deriving a second plurality of measured quantities from the second signals;
   determining a second amount related to latent heat as a function of the second plurality of measured quantities;
   if the determined second amount related to latent heat is less than or equal to the target value related to latent heat:

      recording a time of completion (71);
      calculating an amount of time required for latent heat removal by subtracting from the recorded time of completion (71) the recorded time of startup (63);
      **characterised in** the steps of:

         using the calculated amount of time required for latent heat removal and the first amount related to latent heat to empirically determine a dependence of amounts of time required for latent heat removal on amounts related to latent heat; and
         operating the at least one fan coil unit (27, 34) in accordance with the empirically determined dependence.

2. The method according to claim 1, wherein the dependence is empirically determined by calculating a characteristic curve which fits the determined amount of time required for latent heat removal and the first amount related to latent heat.

3. The method according to claim 2, wherein the characteristic curve maps amounts related to latent heat to amounts of time required for latent heat removal.

4. The method according to claim 3, wherein the characteristic curve is calculated by minimizing the deviation between the characteristic curve and the determined amount of time required for latent heat removal and the first amount related to latent heat.

5. The method according to any of the claims 1 to 4, wherein the at least one fan coil unit (27, 34) is operated in accordance with the empirically determined dependence by
   reading third signals from each sensor of the plurality of sensors (13 - 15);
   deriving a third plurality of measured quantities from the third signals;
   determining a third amount related to latent heat as a function of the third plurality of measured quantities;
   using the empirically determined dependence to calculate forecast value of an amount of time from the third amount related to latent heat;
   operating the at least one fan coil unit (27, 34) in accordance with the calculated forecast value.

**6.** The method according to claim 5, wherein the at least one fan coil unit (27, 34) is operated in accordance with the calculated forecast value by:

calculating a scheduled time of startup from the calculated forecast value;
sending a startup signal to the at least one fan coil unit (27, 34) at the scheduled time of startup;
wherein the startup signal comprises an instruction to start up the fan coil unit (27, 34).

**7.** The method according to claim 5, wherein the at least one fan coil unit (27, 34) is operated in accordance with the calculated forecast value by:

calculating a scheduled time of startup from the calculated forecast value;
starting up operation of the at least one fan coil unit (27, 34) at the scheduled time of startup.

**8.** The method according to any of the claims 1 to 6, wherein the empirically determined dependence is an affine map or a linear map of amounts related to latent heat to amounts of time required for latent heat removal.

**9.** The method according to any of the claims 1 to 8, wherein the at least one fan coil unit (27, 34) comprises a coil and a fan with an adjustable speed and wherein the coil has a maximum capacity for removal of latent heat; and
wherein operating the at least one fan coil unit (27, 34) in accordance with the empirically determined dependence comprises the steps of:

operating the speed of the fan such that dehumidification performance is maximized; and
wherein the speed of the fan speed is calculated periodically using at least one trained characteristic function of the fan or of a dehumidification process and a load value related to latent heat.

**10.** The method according to any of the claims 1 to 9, wherein the HVAC installation comprises at least one outlet duct in fluid communication with the at least one space (1 - 3).

**11.** The method according to claim 1, the method comprising the steps of:
during operation of the at least one fan coil unit (27, 34) repeatedly until a determined fourth amount related to latent heat is less than or equal to the target value related to latent heat carrying out the steps of:

reading fourth signals from each sensor of the plurality of sensors (13 - 15);
deriving a fourth plurality of measured quantities from the fourth signals;

determining the fourth amount related to latent heat as a function of the fourth plurality of measured quantities.

**12.** The method according to any of the claims 1 to 11, wherein the plurality of sensors (13 - 15) comprises at least one moisture sensor (13 - 15) disposed inside the at least one space (1 - 3) and at least one temperature sensor (13 - 15) disposed inside the at least one space (1 - 3).

**13.** A non-transitory, tangible computer readable medium having instructions executable by a processor for performing the method according to any of the previous claims when said instructions are executed on an HVAC installation comprising:

at least one inlet duct, the at least one inlet duct being in fluid communication with at least one space (1-3);
a plurality of sensors (13-25) comprising at least one sensor (13-25) inside the at least one space (1-3);and at least one fan coil unit (27,34) configured to remove latent heat from a fluid flowing through the at least one inlet duct and into the at least one space (1-3).

**Patentansprüche**

**1.** Verfahren zum Steuern einer HLK-Anlage für mindestens einen Raum (1 bis 3) gemäß einem Sollwert in Bezug auf latente Wärme, wobei die HLK-Anlage mindestens einen Einlasskanal, der mit dem mindestens einen Raum (1 bis 3) in Fluidverbindung steht, mehrere Sensoren (13 bis 15), die mindestens einen Sensor (13 bis 15) in dem mindestens einen Raum (1 bis 3) umfassen, und mindestens einen Gebläsekonvektor (27, 34) umfasst, der so konfiguriert ist, dass er aus einem Fluid, das durch den mindestens einen Einlasskanal hindurch in den mindestens einen Raum (1 bis 3) strömt, latente Wärme abführt, wobei das Verfahren folgende Schritte umfasst:

Auslesen erster Signale aus jedem Sensor der mehreren Sensoren (13 bis 15);
Ableiten mehrerer erster Messgrößen aus den ersten Signalen;
Bestimmen einer ersten Menge in Bezug auf latente Wärme in Abhängigkeit von den mehreren ersten Messgrößen;
Starten des Betriebs des mindestens einen Gebläsekonvektors (27, 34) und Aufzeichnen eines Zeitpunkts des Inbetriebsetzens (63);
Auslesen zweiter Signale aus jedem Sensor der mehreren Sensoren (13 bis 15) beim Betrieb des mindestens einen Gebläsekonvektors (27, 34);
Ableiten mehrerer zweiter Messgrößen aus den zweiten Signalen;

Bestimmen einer zweiten Menge in Bezug auf latente Wärme in Abhängigkeit von den mehreren zweiten Messgrößen;

wenn die bestimmte zweite Menge in Bezug auf latente Wärme maximal dem Sollwert in Bezug auf latente Wärme entspricht:

Aufzeichnen eines Zeitpunkts für das Beenden (71);

Berechnen eines für das Abführen von latenter Wärme erforderlichen Zeitraums durch Subtrahieren des aufgezeichneten Zeitpunkts des Inbetriebsetzens (63) von dem aufgezeichneten Zeitpunkt für das Beenden (71);

**gekennzeichnet durch** folgende Schritte:

Benutzen des für das Abführen von latenter Wärme erforderlichen berechneten Zeitraums und der ersten Menge in Bezug auf latente Wärme zum empirischen Bestimmen einer Abhängigkeit von für das Abführen von latenter Wärme erforderlichen Zeiträumen von Mengen in Bezug auf latente Wärme; und

Betreiben des mindestens einen Gebläsekonvektors (27, 34) gemäß der empirisch bestimmten Abhängigkeit.

2. Das Verfahren nach Anspruch 1, wobei die Abhängigkeit durch Berechnen einer Kennlinie empirisch bestimmt wird, die an den für das Abführen von latenter Wärme erforderlichen bestimmten Zeitraum und die erste Menge in Bezug auf latente Wärme angepasst wird.

3. Das Verfahren nach Anspruch 2, wobei die Kennlinie Mengen in Bezug auf latente Wärme auf für das Abführen von latenter Wärme erforderlichen Zeiträumen abbildet.

4. Das Verfahren nach Anspruch 3, wobei die Kennlinie durch Minimieren der Abweichung zwischen der Kennlinie und dem für das Abführen von latenter Wärme erforderlichen bestimmten Zeitraum und der ersten Menge in Bezug auf latente Wärme berechnet wird.

5. Das Verfahren nach einem der Ansprüche 1 bis 4, wobei der mindestens eine Gebläsekonvektor (27, 34) gemäß der empirisch bestimmten Abhängigkeit betrieben wird, indem

aus jedem Sensor der mehreren Sensoren (13 bis 15) dritte Signale ausgelesen werden;

aus den dritten Signalen mehrere dritte Messgrößen abgeleitet werden;

in Abhängigkeit von den mehreren dritten Messgrößen eine dritte Menge in Bezug auf latente Wärme bestimmt wird;

die empirisch bestimmte Abhängigkeit zum Berechnen eines Prognosewerts für einen Zeitraum aus der dritten Menge in Bezug auf latente Wärme benutzt wird;

der mindestens eine Gebläsekonvektor (27, 34) gemäß dem berechneten Prognosewert betrieben wird.

6. Das Verfahren nach Anspruch 5, wobei der mindestens eine Gebläsekonvektor (27, 34) gemäß dem berechneten Prognosewert betrieben wird, indem:

aus dem berechneten Prognosewert ein geplanter Zeitpunkt für das Inbetriebsetzen berechnet wird;

zum geplanten Zeitpunkt des Inbetriebsetzens ein Inbetriebsetzungssignal zu dem mindestens einen Gebläsekonvektor (27, 34) gesendet wird;

wobei das Inbetriebsetzungssignal eine Anweisung umfasst, den Gebläsekonvektor (27, 34) in Betrieb zu setzen.

7. Das Verfahren nach Anspruch 5, wobei der mindestens eine Gebläsekonvektor (27, 34) gemäß dem berechneten Prognosewert betrieben wird, indem:

aus dem berechneten Prognosewert ein geplanter Zeitpunkt für das Inbetriebsetzen berechnet wird;

der mindestens eine Gebläsekonvektor (27, 34) zum geplanten Zeitpunkt des Inbetriebsetzens in Betrieb gesetzt wird.

8. Das Verfahren nach einem der Ansprüche 1 bis 6, wobei es sich bei der empirisch bestimmten Abhängigkeit um eine affine oder eine lineare Abbildung von Mengen in Bezug auf latente Wärme auf für das Abführen von latenter Wärme erforderlichen Zeiträumen handelt.

9. Das Verfahren nach einem der Ansprüche 1 bis 8, wobei der mindestens eine Gebläsekonvektor (27, 34) einen Wärmetauscher und ein Gebläse mit regulierbarer Drehzahl umfasst und der Konvektor eine maximale Kapazität für das Abführen von latenter Wärme besitzt und

wobei das Betreiben des mindestens einen Gebläsekonvektors (27, 34) gemäß der empirisch bestimmten Abhängigkeit folgende Schritte umfasst:

Betreiben des Gebläses mit einer Drehzahl, die für eine maximale Entfeuchtungsleistung sorgt; und

wobei die Drehzahl des Gebläses mithilfe mindestens einer trainierten charakteristischen Funktion des Gebläses oder eines Entfeuchtungsprozesses und eines Lastwertes in Bezug auf latente Wärme regelmäßig berechnet wird.

10. Das Verfahren nach einem der Ansprüche 1 bis 9, wobei die HLK-Anlage mindestens einen Auslasskanal umfasst, der mit dem mindestens einen Raum (1 bis 3) in Fluidverbindung steht.

11. Das Verfahren nach Anspruch 1, das folgende Schritte umfasst:
beim Betrieb des mindestens einen Gebläsekonvektors (27, 34) wiederholtes Durchführen folgender Schritte, bis eine bestimmte vierte Menge in Bezug auf latente Wärme maximal dem Sollwert in Bezug auf latente Wärme entspricht:

> Auslesen vierter Signale aus jedem Sensor der mehreren Sensoren (13 bis 15);
> Ableiten mehrerer vierter Messgrößen aus den vierten Signalen;
> Bestimmen der vierten Menge in Bezug auf latente Wärme in Abhängigkeit von den mehreren vierten Messgrößen.

12. Das Verfahren nach einem der Ansprüche 1 bis 11, wobei die mehreren Sensoren (13 bis 15) mindestens einen in dem mindestens einen Raum (1 bis 3) angeordneten Feuchtesensor (13 bis 15) und mindestens einen in dem mindestens einen Raum (1 bis 3) angeordneten Temperatursensor (13 bis 15) umfassen.

13. Nichtflüchtiges, physisches, computerlesbares Medium mit von einem Prozessor ausführbaren Anweisungen zum Durchführen des Verfahrens nach einem der vorhergehenden Ansprüche, wenn die Anweisungen in einer HLK-Anlage ausgeführt werden, die Folgendes umfasst:

> mindestens einen Einlasskanal, der mit mindestens einem Raum (1 bis 3) in Fluidverbindung steht;
> mehrere Sensoren (13 bis 25), die mindestens einen Sensor (13 bis 25) in dem mindestens einen Raum (1 bis 3) umfassen; und
> mindestens einen Gebläsekonvektor (27, 34), der so konfiguriert ist, dass er aus einem Fluid, das durch den mindestens einen Einlasskanal hindurch in den mindestens einen Raum (1 bis 3) strömt, latente Wärme abführt.

**Revendications**

1. Procédé de commande d'une installation CVC pour au moins un espace (1 - 3) selon une valeur cible liée à la chaleur latente, l'installation CVC comprenant au moins un conduit d'entrée, l'au moins un conduit d'entrée étant en communication fluidique avec l'au moins un espace (1 - 3), une pluralité de capteurs (13 - 15) comprenant au moins un capteur (13 - 15) à l'intérieur de l'au moins un espace (1 - 3), et au moins un ventilo-convecteur (27, 34) conçu pour éliminer la chaleur latente d'un fluide s'écoulant à travers l'au moins un conduit d'entrée et dans l'au moins un espace (1 - 3), le procédé comprenant les étapes :

> de lecture des premiers signaux de chaque capteur de la pluralité de capteurs (13 - 15) ;
> de déduction d'une première pluralité de quantités mesurées à partir des premiers signaux ;
> de détermination d'une première quantité liée à la chaleur latente en fonction de la première pluralité de quantités mesurées ;
> de démarrage de la mise en service de l'au moins un ventilo-convecteur (27, 34) et d'enregistrement d'une heure du démarrage (63) ;
> pendant la mise en service de l'au moins un ventilo-convecteur (27, 34), de lecture des deuxièmes signaux de chaque capteur de la pluralité de capteurs (13 - 15) ;
> de déduction d'une deuxième pluralité de quantités mesurées à partir des deuxièmes signaux ;
> de détermination d'une deuxième quantité liée à la chaleur latente en fonction de la deuxième pluralité de quantités mesurées ;
> si la deuxième quantité déterminée liée à la chaleur latente est inférieure ou égale à la valeur cible liée à la chaleur latente :

>> d'enregistrement d'une heure d'achèvement (71) ;
>> de calcul d'une durée nécessaire pour l'élimination de la chaleur latente en soustrayant le temps de démarrage (63) enregistré du temps d'achèvement (71) enregistré ;

> **caractérisé par** les étapes :

>> d'utilisation de la durée calculée nécessaire pour l'élimination de la chaleur latente et de la première quantité liée à la chaleur latente pour déterminer empiriquement une dépendance des durées nécessaires pour l'élimination de la chaleur latente sur les quantités liées à la chaleur latente ; et
>> de mise en service de l'au moins un ventilo-convecteur (27, 34) selon la dépendance déterminée empiriquement.

2. Le procédé selon la revendication 1, dans lequel la dépendance est déterminée empiriquement en calculant une courbe caractéristique qui correspond à la durée déterminée nécessaire pour l'élimination de la chaleur latente et la première quantité liée à la chaleur latente.

3. Le procédé selon la revendication 2, dans lequel la courbe caractéristique fait correspondre les quantités liées à la chaleur latente aux durées nécessaires pour l'élimination de la chaleur latente.

4. Le procédé selon la revendication 3, dans lequel la courbe caractéristique est calculée en minimisant l'écart entre la courbe caractéristique et la durée déterminée nécessaire pour l'élimination de la chaleur latente et la première quantité liée à la chaleur latente.

5. Le procédé selon l'une quelconque des revendications 1 à 4, dans lequel l'au moins un ventilo-convecteur (27, 34) est mis en service selon la dépendance déterminée empiriquement par

la lecture de troisièmes signaux de chaque capteur de la pluralité de capteurs (13-15) ;
la déduction d'une troisième pluralité de quantités mesurées à partir des troisièmes signaux ;
la détermination d'une troisième quantité liée à la chaleur latente en fonction de la troisième pluralité de quantités mesurées ;
l'utilisation de la dépendance déterminée empiriquement pour calculer la valeur de prévision d'une durée à partir de la troisième quantité liée à la chaleur latente ;
la mise en service de l'au moins un ventilo-convecteur (27, 34) selon la valeur de prévision calculée.

6. Le procédé selon la revendication 5, dans lequel l'au moins un ventilo-convecteur (27, 34) est mis en service selon la valeur de prévision calculée par :

le calcul d'une heure de démarrage planifiée à partir de la valeur de prévision calculée ;
l'envoi d'un signal de démarrage à l'au moins un ventilo-convecteur (27, 34) à l'heure de démarrage planifiée ;
dans lequel le signal de démarrage comprend une instruction pour démarrer le ventilo-convecteur (27, 34).

7. Le procédé selon la revendication 5, dans lequel l'au moins un ventilo-convecteur (27, 34) est mis en service selon la valeur de prévision calculée par :

le calcul d'une heure de démarrage planifiée à partir de la valeur de prévision calculée ;
le démarrage de la mise en service de l'au moins un ventilo-convecteur (27, 34) à l'heure de démarrage planifiée.

8. Le procédé selon l'une quelconque des revendications 1 à 6, dans lequel la dépendance déterminée empiriquement est une correspondance affine ou une correspondance linéaire des quantités liées à la chaleur latente aux durées nécessaires pour l'élimination de la chaleur latente.

9. Le procédé selon l'une quelconque des revendications 1 à 8, dans lequel l'au moins un ventilo-convecteur (27, 34) comprend une bobine et un ventilateur avec une vitesse réglable et dans lequel la bobine a une capacité maximale pour éliminer la chaleur latente ; et
dans lequel la mise en service de l'au moins un ventilo-convecteur (27, 34) selon la dépendance déterminée empiriquement comprend les étapes :

de mise en œuvre de la vitesse du ventilateur de sorte que les performances de déshumidification sont maximisées ; et
dans lequel la vitesse de la vitesse de ventilateur est calculée périodiquement en utilisant au moins une fonction caractéristique entraînée du ventilateur ou d'un processus de déshumidification et une valeur de charge liée à la chaleur latente.

10. Le procédé selon l'une quelconque des revendications 1 à 9, dans lequel l'installation CVC comprend au moins un conduit de sortie en communication fluidique avec l'au moins un espace (1 - 3).

11. Le procédé selon la revendication 1, le procédé comprenant les étapes :
pendant la mise en service de l'au moins un ventilo-convecteur (27, 34) de manière répétée jusqu'à ce qu'une quatrième quantité déterminée liée à la chaleur latente soit inférieure ou égale à la valeur cible liée à la chaleur latente en exécutant les étapes :

de lecture de quatrièmes signaux de chaque capteur de la pluralité de capteurs (13 - 15) ;
de déduction d'une quatrième pluralité de quantités mesurées à partir des quatrièmes signaux ;
de détermination de la quatrième quantité liée à la chaleur latente en fonction de la quatrième pluralité de quantités mesurées.

12. Le procédé selon l'une quelconque des revendications 1 à 11, dans lequel la pluralité de capteurs (13 - 15) comprend au moins un capteur d'humidité (13 - 15) disposé à l'intérieur de l'au moins un espace (1 - 3) et au moins un capteur de température (13 - 15) disposé à l'intérieur de l'au moins un espace (1 - 3).

**13.** Support non transitoire, tangible lisible par ordinateur, ayant des instructions exécutables par un processeur pour exécuter le procédé selon l'une quelconque des revendications précédentes lorsque lesdites instructions sont exécutées sur une installation CVC comprenant :

> au moins un conduit d'entrée, l'au moins un conduit d'entrée étant en communication fluidique avec au moins un espace (1 - 3) ;
> une pluralité de capteurs (13 - 25) comprenant au moins un capteur (13 - 25) à l'intérieur de l'au moins un espace (1 - 3) ; et au moins un ventilo-convecteur (27, 34) conçu pour éliminer la chaleur latente d'un fluide s'écoulant à travers l'au moins un conduit d'entrée et dans l'au moins un espace (1-3) .

FIG 1

EP 3 460 349 B1

FIG 2

EP 3 460 349 B1

FIG 3

FIG 4

EP 3 460 349 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7809472 B1
- US 8790451 B1
- US 4984433 A
- US 6427454 B1
- EP 2902720 A1
- JP 2012218202 B
- US 5303561 A
- US 8155900 B1
- EP 2806223 A1